# EUROPEAN PATENT SPECIFICATION

(11) **EP 1 554 136 B1**
(45) Date of publication and mention of the grant of the patent: **28.06.2006**
(21) Application number: 03758350.7
(22) Date of filing: 24.10.2003
(51) Int. Cl.: B60D 1/66

(54) **JOCKEY WHEEL ASSEMBLY**
STÜTZRADAUFBAU
ENSEMBLE ROUE JOCKEY

(30) Priority: 26.10.2002 GB 0224976
(43) Date of publication of application: 20.07.2005
(73) Proprietor: Purple Line Limited, Hadleigh Ipswich Suffolk IP7 6BQ (GB)
(72) Inventor: HARRISON, Jonathan Mark, Hadleigh, Ipswich IP7 5DR (GB)
(74) Representative: Bone, Alexander Marcus Thomas
(86) International application number: PCT/GB2003/004571
(87) International publication number: WO 2004/037567

(56) References cited:
- AU-B- 447 577
- CH-A- 211 222
- GB-A- 2 046 190
- US-A- 2 638 315
- US-A- 3 345 037
- US-A- 4 588 204
- US-A- 5 016 900
- US-B1- 6 213 491
- US-B1- 6 485 002

## Description

The present invention relates to a jockey wheel assembly, in particular to a jockey wheel assembly for a caravan or other trailer.

It is common practice to have a jockey wheel assembly attached to the towing hitch at the front of a caravan to support the front end of the caravan when it is unhitched from a towing vehicle. Such a jockey wheel assembly often comprises a wheel attached to an elongate body member. The body member is attached to the towing hitch using a bracket. The jockey wheel is raised or removed when the caravan is being towed to avoid the wheel making contact with the ground which may cause damage. The jockey wheel is lowered or re-attached when the caravan is unhitched so that the wheel makes contact with the ground. This provides support for the front of the caravan to keep the floor of the caravan level and the wheel facilitates manoeuvring of the caravan once it is unhitched.

With conventional jockey wheels, moving the caravan once it has been unhitched involves manual pushing or pulling of the caravan. It is known to provide a jockey wheel in which the jockey wheel is driven using a chain drive between a gear attached to a rotatable handle near a top of the body member and a gear attached to the wheel. This allows the wheel to be driven by rotating the handle which facilitates moving the caravan. However, the chain may come off the gears if not properly fitted, or the jockey wheel assembly may be subjected to shocks which may occur when the caravan is being towed which may cause the chain to come off the gears. The gear attached to the wheel may be large and therefore require significant clearance to enable the wheel to be rotated. This may result in the wheel requiring a large diameter to enable the wheel to be driven. A driveshaft driven jockey wheel assembly according to the preamble of independent claim 1 is known from AU 447 577 B.

It is an object of the present invention to provide a more versatile jockey wheel assembly.

According to the invention there is provided a A jockey wheel assembly for a caravan, the jockey wheel assembly comprising at least one wheel for engaging the ground, a body member, a top portion and a bottom portion, the body member being tubular, substantially hollow and elongate along a first axis, the top portion and bottom portion are coupled to the body member at opposite ends of the body member, the wheel is rotatably mounted to the bottom portion and the top portion includes a first rotatable member rotatably mounted thereto, the jockey wheel assembly further comprises drive means for coupling the first rotatable member to the wheel such that rotation of the first rotatable member causes rotation of the wheel, the drive means comprise a drive shaft that extends through the body member, characterised in that at least one of the top portion and the bottom portion is releasably coupled to the body member by a manually releasable coupling such that, in use, the at least one of the top portion and the bottom portion is manually removable by a user without the need for tools by releasing the releasable coupling.

The term manually removable by a user is used herein to describe that a user may remove and refit the relevant portion by hand without the need for tools. This may be achieved in a number of ways, for example bayonet fittings, press fit couplings or other means may be used. However, it is presently preferred that a region of the body member or removable portion includes an external thread and that the other of the body member or removable portion includes a collar having an internal thread rotatably secured thereto such that the collar may engage with the external thread to secure the body member to the removable portion. It should be noted that the body portion may be formed integrally with the one of the top or bottom portion that is not removable such that the assembly comprises, for example a removable bottom portion and an integrated body member and top portion. This may reduce manufacturing complexity and will also reduce the number of parts that a user must assemble.

Having a removable top portion or bottom portion of the jockey wheel assembly allows the assembly to be quickly fitted to an existing bracket without the need to completely release the bracket or remove any cover or cowling covering the towing hitch. This is possible because the top and bottom portions of a jockey wheel assembly are usually wider than the body member, so removing one of the top and bottom portions enables the body member to slide through the clamp before the removable portion is reattached. Preferably it is the bottom portion including the wheel that is removable as this removes the need to remove the jockey wheel assembly from the caravan or trailer. This means that the rest of the jockey wheel assembly can remain in place during transportation of the caravan which reduces set-up time when the caravan is to be unhitched.

According to a preferred embodiment of the invention, the bottom portion is removable from the body member and may be attached to the top portion for storage. In such an embodiment the top portion may include a projection onto which the bottom portion may be secured when not in use.

A jockey wheel assembly with a drive means including a drive shaft that extends through the body member may be able to transmit higher torque than a chain drive from the rotatable member to the wheel to facilitate moving the caravan precisely and with less physical effort. A drive shaft may be less likely to break under load than a chain drive and assembly of drive means including a drive shaft is less complex as there is no need to ensure that a chain is correctly tensioned.

The use of a drive shaft to couple the first rotatable member to the wheel permits the use of bevelled gears to couple the wheel to the drive shaft and/or the first rotatable member to the drive shaft. The use of bevelled gears may increase the reliability of the drive means. The use of a drive shaft to couple the first rotatable member to the wheel permits the top or bottom portion to be removed and reattached without the need to re-attach a chain to one or more gears. To permit removal of the top or bottom portion, the drive shaft may comprise two or more sections coupled to transmit the torque, but that can be separated and re-engaged to allow removal and refitting of the top or bottom portion. In this way the top or bottom portion can comprise a section of the drive shaft. However, it should be understood that removal and reattachment of the top or bottom portion may involve the separation and re-engagement of one or more gears, or the separation of sections of the drive shaft.

Providing a jockey wheel assembly with removable and replaceable portions means that in the event of damage to one or more of the parts of the jockey wheel assembly, the user is able to replace only the damaged part without the need to replace or service the entire assembly.

It is preferred that the first rotatable member in the top portion may be manually rotated to cause rotation of the wheel and a handle is preferably provided to enable manual rotation of the rotatable member. The handle is preferably removable to reduce the overall size of the jockey wheel assembly when the wheel is not being driven and reduce the number of protrusions that may cause injury if a person or animal walked into them.

The jockey wheel assembly preferably includes a sleeve on the body member that is movable relative to the body member by rotation of a second rotatable member in the top portion. The jockey wheel assembly may be attached to the caravan towing hitch using a bracket that clamps onto the sleeve that surround the body member. Providing a sleeve that is movable relative to the body enables the clearance between the ground and bracket to be adjusted by moving the sleeve.

It is preferred that the same removable handle that enables manual rotation of the first rotatable member also enables manual rotation of the second rotatable member as this reduces the number of parts required in the assembly. The handle may include a ratchet mechanism to facilitate manual rotation of the rotatable members. The rotatable members preferably extend in a direction substantially perpendicular to the first axis and the handle therefore preferably rotates in a plane that is substantially parallel to the first axis as this provides a more natural motion for a user of the jockey wheel assembly.

The jockey wheel assembly may include a tiller that extends substantially perpendicular to the first axis and preferably substantially parallel with the direction of travel of the wheel. The tiller facilitates manual orientation of the wheel so that when the wheel is driven the caravan travels in the correct direction. If the tiller is aligned with the direction of travel of the wheel, then orientation of the wheel is facilitated. The tiller is preferably collapsible so that it lies substantially along the body member when not in use as this reduces the number of protrusions from the assembly that may cause injury.

It is preferred that the jockey wheel assembly comprises two wheels, one on either side of the bottom portion as this provides greater symmetry and may result in greater stability. The use of two wheels also provides a greater area of contact with the ground and thus provides greater traction.

It should be understood that a jockey wheel assembly according to the invention may be suitable for use with any trailer and not just caravans, however for simplicity the invention will be described in relation to use with a caravan.

The invention will now be further described, by way of example, with reference to the accompanying drawings, in which:
Figure 1 shows a towing hitch of a caravan with a jockey wheel assembly attached;
Figure 2 shows a jockey wheel assembly according to a presently preferred embodiment of the invention;
Figure 3 shows a detailed view of the coupling between the bottom portion and the body member of Figure 2 when it is uncoupled; and
Figure 4 show a schematic cross section of the jockey wheel assembly of Figure 2.

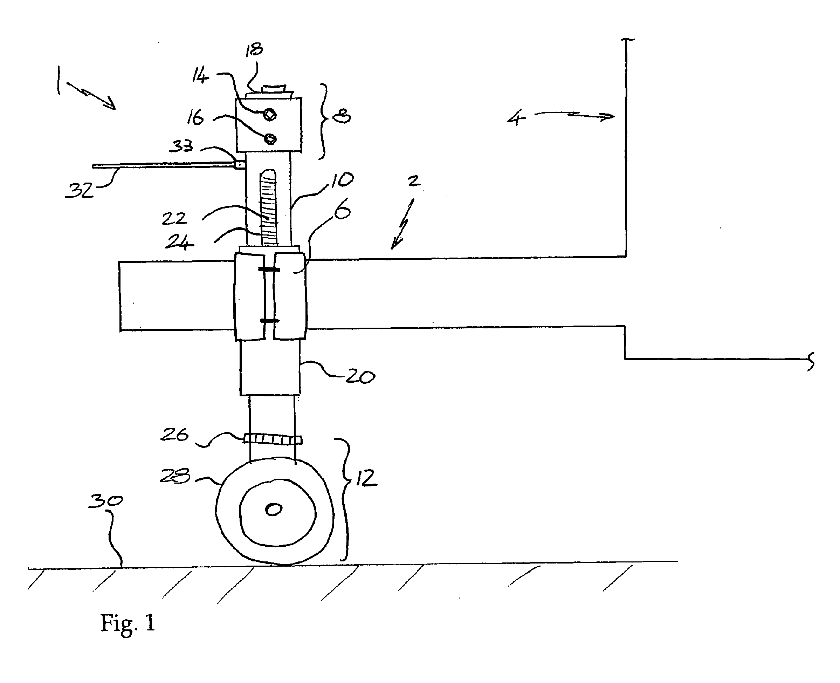

Figure 1 shows a jockey wheel assembly 1 attached to the towing hitch 2 of a caravan 4. The jockey wheel assembly 1 is attached to the towing hitch 2 using a clamp 6. The jockey wheel assembly 1 comprises a top portion 8, an elongate body member 10 and a bottom portion 12.

The top portion 8 is attached to the body member 10 and includes a first rotatable member 14 and a second rotatable member 16. The top portion also includes a mount 18 for storing the bottom portion 12.

The body member 10 is elongate and substantially hollow. A sleeve 20 surrounds a part of the body member 10. The clamp 6 is secured to the sleeve 20 and the sleeve is movable relative to the body member 10 to allow the towing hitch 2 to be raised or lowered relative to the ground 30. The sleeve 20 is coupled to a threaded tube 22 within the body member 10 through an aperture 24 in the body member. The threaded tube is coupled to the second rotatable member 16. This means that rotation of the second rotatable member 16 causes rotation of the threaded tube 22 and this in turn causes the sleeve 20 to move up or down the body member 10 depending upon the direction of rotation of the second rotatable member 16.

The body member 10 is coupled to the bottom portion 12 by a rotatable collar 26. The collar 26 is rotatably mounted on the bottom portion 12 and includes an internal thread. The body member 10 includes an external thread 38 with which the thread in the collar 26 engages to couple the bottom portion 12 to the body member 10.

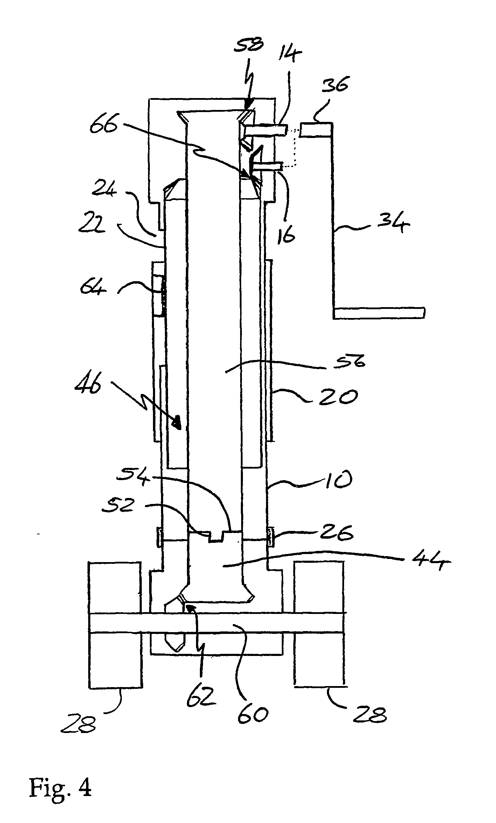

The bottom portion 12 includes wheels 28 that engage the ground 30. The wheels 28 are coupled to the first rotatable member 14 by drive means such that rotation of the first rotatable member 14 causes rotation of the wheels. A preferred embodiment of the drive means is shown in Figure 4.

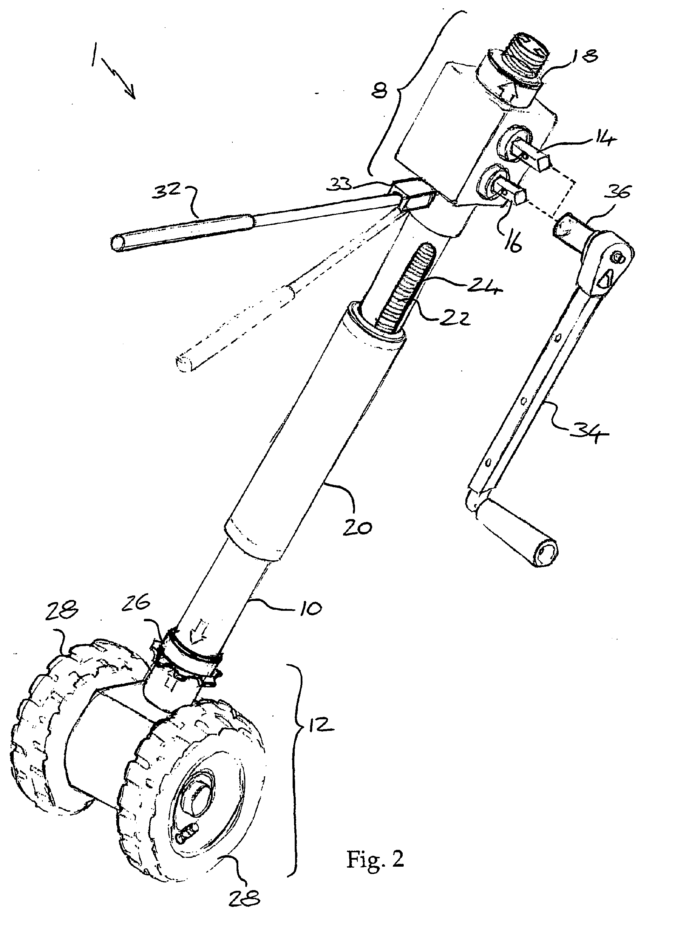

The body member further comprises a tiller 32 that extends substantially perpendicular to the body member 10 and substantially parallel with the direction of travel of the wheels 28. The tiller 32 allows the body member 10 to be rotated to control the direction in which the wheels 28 are facing and thus in which the caravan 4 travels. The tiller 32 includes a hinge 33 that allows the tiller 32 to be folded against the body member 10 for ease of storage and compactness. A ghosted outline of the tiller 32 in a part folded position is shown in Figure 2.

Figure 2 shows a perspective drawing of a preferred embodiment of the invention. Features that are the same as those described with reference to Figure 1 will be given the same reference numerals.

Figure 2 shows two wheels 28 attached on either side of the bottom portion 12. Also shown in this figure is a handle 34 that may be used to rotate either of the rotatable members 14,16. The rotatable members 14,16 have a square projection that engages with a corresponding recess in a head 36 of the handle 34.

The handle 34 includes a ratchet mechanism 37 to facilitate rotation of the rotatable members 14,16. The recess in the head of the handle may be of an appropriate size for use with bolt heads or nuts of a size commonly used on caravans. In this embodiment, the length of the handle 34 is adjustable and may be increased so a greater turning force can be applied to the rotatable member if required.

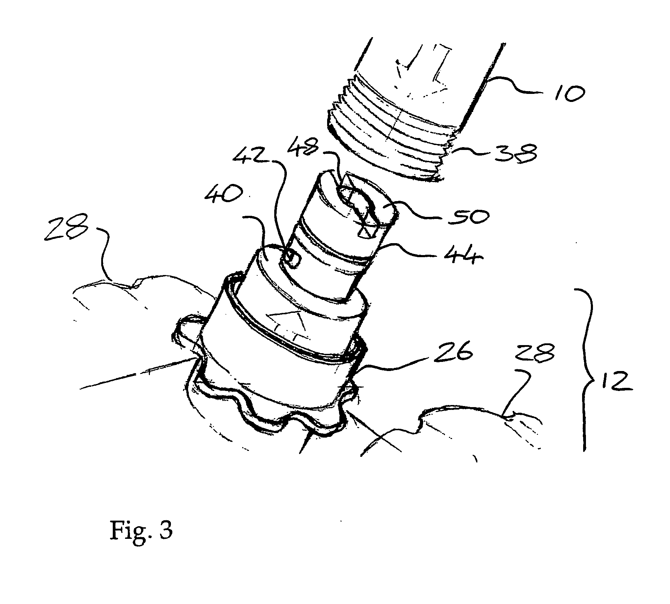

Figure 3 shows a detailed view of the coupling between the bottom portion 12 and the body member 10 of Figure 2 when it is uncoupled.

To refit the bottom portion 12 to the body member 10 the body member is fitted over the bottom portion 12 until it abuts a shoulder 40. The body member 10 is aligned with the bottom portion 12 and prevented from rotating by a pip 42 on a side of the bottom portion 12, which fits into a corresponding channel within the body member 10. The external thread 38 on the body member engages with the internal thread of the collar 26 and the collar is rotated until the bottom portion 12 is securely coupled to the body member 10. It should be noted that the coupling works in the same way if the collar is on the body member and the external thread on the bottom portion and such an arrangement may prove easier to use as the alignment between the body member and bottom portion may be facilitated if the moveable collar is on the body member.

The bottom portion 12 comprises a lower section 44 of the drive shaft 46. The lower section 44 of the drive shaft includes a channel 48 in a top surface 50. The channel 48 couples with a projection 52 from a lower surface 54 of an upper section 56 of the drive shaft 46. In this way torque may be transmitted along the drive shaft 46 between the first rotatable member 14 to the wheels 28.

Figure 4 shows a schematic diagram of the presently preferred embodiment of the drive means. The drive means comprise a drive shaft 46 which comprises an upper section 56 and a lower section 44. The drive shaft 46 couples the first rotatable member 14 with the wheels 28. The first rotatable member is coupled to the drive shaft 46 by bevelled gears 58. The wheels 28 are both coupled to a driving axle 60 and the axle is coupled to the drive shaft by bevelled gears 62.

The sleeve 20 is coupled to the threaded tube 22 through aperture 24 in the body member 10. The sleeve has a threaded projection 64 that passes through the aperture 24 and engages with the threaded tube 22. The threaded tube 22 is coupled to the second rotatable member 16 by bevelled gears 66.

The present invention has been described above purely by way of example. It should be noted that modifications in detail may be made within the scope of the invention as defined in the claims.

## Claims

1. A jockey wheel assembly (1) for a caravan (4), the jockey wheel assembly (1) comprising at least one wheel (28) for engaging the ground, a body member (10), a top portion (8) and a bottom portion (12), the body member (10) being tubular, substantially hollow and elongate along a first axis, the top portion (8) and bottom portion (12) are coupled to the body member (10) at opposite ends of the body member, the wheel (28) is rotatably mounted to the bottom portion (12) and the top portion (8) includes a first rotatable member (14) rotatably mounted thereto, the jockey wheel assembly (1) further comprises drive means for coupling the first rotatable member to the wheel such that rotation of the first rotatable member causes rotation of the wheel, the drive means comprise a drive shaft (46) that extends through the body member (10), **characterised in that** at least one of the top portion (8) and the bottom portion (12) is releasably coupled to the body member (10) by a manually releasable coupling (26,38) such that, in use, the at least one of the top portion (8) and the bottom portion (12) is manually removable by a user without the need for tools by releasing the releasable coupling.

2. A jockey wheel assembly as claimed in claim 1, in which the drive shaft (46) comprises at least two sections (44,56).

3. A jockey wheel assembly as claimed in claim 2, in which the removable portion comprises at least one section (44) of the drive shaft (46).

4. A jockey wheel assembly as claimed in any preceding claim in which the bottom portion (12) comprises a rotatable collar (26) and the body member comprises a threaded portion (38), the bottom portion being coupled to the body member by engagement between the threaded portion and threaded collar, a user being able to unscrew the collar to remove the bottom portion.

5. A jockey wheel assembly as claimed any preceding claim, in which the wheel (28) is coupled to the drive shaft by bevelled gears (62).

6. A jockey wheel assembly as claimed in any preceding claim, in which the first rotatable member is coupled to the drive shaft by bevelled gears (58).

7. A jockey wheel assembly as claimed in any preceding claim, in which the first rotatable member (14) extends from the top portion (8) substantially perpendicular to the first axis.

8. A jockey wheel assembly as claimed in any preceding claim, in which the jockey wheel assembly comprises a sleeve (20) on the body member (10) and the top portion (8) includes a second rotatable member (16) coupled to the sleeve (20) such that rotation of the second rotatable member causes movement of the sleeve (20) along the first axis relative to the body member.

9. A jockey wheel assembly as claimed in claim 8, in which the second rotatable member (16) extends from the top portion substantially perpendicular to the first axis.

10. A jockey wheel assembly as claimed in claim 8 or claim 9, further comprising at least one removable handle (34) that may be coupled to the first rotatable member or the second rotatable member to permit manual rotation of the rotatable members.

11. A jockey wheel assembly as claimed in claim 10, in which a single removable handle (34) may be coupled to either of the rotatable members.

12. A jockey wheel assembly as claimed in claim 10 or claim 11, in which the removable handle is coupled to the rotatable members using a ratchet mechanism.

13. A jockey wheel assembly as claimed in any preceding claim, in which the jockey wheel assembly further comprises a tiller handle (32) extending from the top portion substantially perpendicular to the first axis.

14. A jockey wheel assembly as claimed in claim 13, in which the tiller includes a hinge (33) so that it may be folded to extend substantially parallel to the first axis along the body member.

15. A jockey wheel assembly as claimed in any preceding claim, in which a second wheel (28) is rotatably coupled to the bottom portion on a side opposite the first wheel.

16. A trailer equipped with a jockey wheel assembly (1) as claimed in any preceding claim.

## Patentansprüche

1. Stützradaufbau (1) für einen Caravan (4), wobei der Stützradaufbau (1) wenigstens ein Rad (28) zum Angreifen an dem Boden, ein Körperelement (10), einen Oberteil (8) und einen Unterteil (12) aufweist, wobei das Körperelement (10) rohrförmig, im wesentlichen hohl und entlang einer ersten Achse länglich ist, der Oberteil (8) und der Unterteil (12) mit dem Körperelement (10) an gegenüberliegenden Enden des Körperelements verbunden sind, das Rad (28) drehbar an dem Unterteil (12) montiert ist und der Oberteil (8) ein erstes, drehbares Element (14), das drehbar daran befestigt ist, aufweist, wobei der Stützradaufbau (1) ferner Antriebsmittel zur Kopplung des ersten, drehbaren Elements mit dem Rad aufweist, so dass die Drehung des ersten, drehbaren Elements eine Drehung des Rades verursacht, wobei die Antriebsmittel eine Antriebswelle (46) aufweisen, die sich durch das Körperelement (10) erstreckt, **dadurch gekennzeichnet, dass** wenigstens der Oberteil (8) und/oder der Unterteil (12) lösbar mit dem Körperelement (10) durch eine von Hand lösbare Kupplung (26, 38) gekoppelt ist, so dass im Einsatz der Oberteil (8) und/oder der Unterteils (12) von Hand durch einen Benutzer ohne die Notwendigkeit für Werkzeuge zu entfernen ist, indem die lösbare Kupplung freigegeben wird.

2. Stützradaufbau nach Anspruch 1, in dem die Antriebswelle (46) wenigstens zwei Abschnitte (44, 56) umfasst.

3. Stützradaufbau nach Anspruch 2, in dem der entfernbare Abschnitt wenigstens einen Abschnitt (44) der Antriebswelle (46) umfasst.

4. Stützradaufbau nach einem der vorhergehenden Ansprüche, in dem der Unterteil (12) einen drehbaren Kragen (26) aufweist und das Körperelement einen Gewindeabschnitt (38) aufweist, wobei der Unterteil mit dem Körperelement durch Eingriff zwischen dem Gewindeabschnitt und dem mit einem Gewinde versehenen Kragen gekoppelt ist, wobei der Benutzer in der Lage ist, den Kragen abzuschrauben, um den Unterteil zu entfernen.

5. Stützradaufbau nach einem der vorhergehenden Ansprüche, in dem das Rad (28) mit der Antriebswelle durch Kegelzahnräder (62) gekoppelt ist.

6. Stützradaufbau nach einem der vorhergehenden Ansprüche, in dem das erste, drehbare Element mit der Antriebswelle durch Kegelzahnräder (58) gekoppelt ist.

7. Stützradaufbau nach einem der vorhergehenden Ansprüche, in dem das erste, drehbare Element (14) sich von dem Oberteil (8) im wesentlichen senkrecht zu der ersten Achse erstreckt.

8. Stützradaufbau nach einem der vorhergehenden Ansprüche, in dem der Stützradaufbau eine Buchse (20) auf dem Körperelement (10) aufweist und der Oberteil (8) ein zweites, drehbares Element (16) aufweist, das mit der Buchse (20) so gekoppelt ist, so dass eine Drehung des zweiten, drehbaren Elements eine Bewegung der Buchse (20) entlang der ersten Achse relativ zu dem Körperelement bewirkt.

9. Stützradaufbau nach Anspruch 8, in dem das zweite, drehbare Element (16) sich von dem Oberteil im wesentlichen senkrecht zu der ersten Achse erstreckt.

10. Stützradaufbau nach Anspruch 8 oder 9, ferner umfassend wenigstens einen abnehmbaren Handgriff (34), der mit dem ersten, drehbaren Element oder dem zweiten, drehbaren Element zu koppeln ist, um eine Drehung der drehbaren Elemente von Hand zu gestatten.

11. Stützradaufbau nach Anspruch 10, in dem der einzige, abnehmbare Handgriff (34) mit einem der drehbaren Elemente koppelbar ist.

12. Stützradaufbau nach Anspruch 10 oder 11, in dem der abnehmbare Handgriff mit den drehbaren Elementen unter Verwendung eines Klinken-Mechanismus gekoppelt ist.

13. Stützradaufbau nach einem der vorhergehenden Ansprüche, in dem der Stützradaufbau ferner eine Griffstange (32) aufweist, die sich von dem Oberteil im wesentlichen senkrecht zu der ersten Achse erstreckt.

14. Stützradaufbau nach Anspruch 13, in dem die Handstange ein Gelenk (33) umfasst, so dass sie faltbar ist, so dass sie sich im wesentlichen parallel zu der ersten Achse entlang dem Körperelement erstreckt.

15. Stützradaufbau nach einem der vorhergehenden Ansprüche, in dem ein zweites Rad (28) drehbar mit dem Unterteil auf der gegenüberliegenden Seite des ersten Rades gekoppelt ist.

16. Anhänger, der mit einem Stützradaufbau (1), wie in einem der vorhergehenden Ansprüche beansprucht, ausgerüstet ist.

## Revendications

1. Ensemble roue jockey (1) destiné à une caravane (4), l'ensemble roue jockey (1) comprenant au moins une roue (28) pour l'engagement au sol, un élément de corps (10), une portion supérieure (8) et une portion inférieure (12), l'élément de corps (10) étant tubulaire, sensiblement creux et oblong le long d'un premier axe, la portion supérieure (8) et la portion inférieure (12) sont accouplées à l'élément de corps (10) sur les extrémités opposées de l'élément de corps, la roue (28) est monté de façon rotative sur la portion inférieure (12) et la portion supérieure (8) comprend un premier élément rotatif (14) monté de façon rotative sur celle-ci, l'ensemble roue jockey (1) comprend de plus des moyens d'entraînement pour l'accouplement du premier élément rotatif sur la roue, de telle sorte que la rotation du premier élément rotatif provoque la rotation de la roue, les moyens d'entraînement comprennent un arbre d'entraînement (46) qui s'étend à travers l'élément de corps (10), **caractérisé en ce qu'**au moins la portion supérieure (8) et la portion inférieure (12) sont accouplées de façon libérable à l'élément de corps (10) par un accouplement manuellement libérable (26, 38), de telle sorte que, dans l'utilisation, au moins l'une parmi la portion supérieure (8) et la portion inférieure (12) est manuellement libérable par l'utilisateur sans nécessiter des outils pour la libération de l'accouplement libérable.

2. Ensemble roue jockey selon la revendication 1, dans lequel l'arbre d'entraînement (46) comprend au moins deux sections (44, 56).

3. Ensemble roue jockey selon la revendication 2, dans lequel la portion libérable comprend au moins une section (44) de l'arbre d'entraînement (46).

4. Ensemble roue jockey selon l'une quelconque des revendications précédentes, dans lequel la portion inférieure (12) comprend un collier rotatif (26) et l'élément de corps comprend une portion filetée (38), la portion inférieure étant accouplée à l'élément de corps par engagement entre la portion filetée et le collier fileté, un utilisateur pouvant dévisser le collier pour enlever la portion inférieure.

5. Ensemble roue jockey selon l'une quelconque des revendications précédentes, dans lequel la roue (28) est accouplée à l'arbre d'entraînement par des engrenages biseautés (62).

6. Ensemble roue jockey selon l'une quelconque des revendications précédentes, dans lequel le premier élément rotatif est accouplé à l'arbre d'entraînement par des engrenages biseautés (58).

7. Ensemble roue jockey selon l'une quelconque des revendications précédentes, dans lequel le premier élément rotatif (14) s'étend à partir de la portion supérieure (8) sensiblement perpendiculairement au premier axe.

8. Ensemble roue jockey selon l'une quelconque des revendications précédentes, dans lequel l'ensemble roue jockey comprend un manchon (20) sur l'élément de corps (10) et la partie supérieure (8) comprend un second élément rotatif (16) accouplé au manchon (20), de telle sorte que la rotation du second élément rotatif provoque le mouvement du manchon (20) le long du premier axe par rapport à l'élément de corps.

9. Ensemble roue jockey selon la revendication 8, dans lequel le second élément rotatif (16) s'étend à partir de la portion supérieure sensiblement perpendiculairement au premier axe.

10. Ensemble roue jockey selon la revendication 8 ou la revendication 9, comprenant au moins une poignée amovible (34) qui peut être accouplée au premier élément rotatif ou au second élément rotatif pour permettre la rotation manuelle des éléments rotatifs.

11. Ensemble roue jockey selon la revendication 10, dans lequel une simple poignée amovible (34) peut être accouplée à l'un quelconque des éléments rotatifs.

12. Ensemble roue jockey selon la revendication 10 ou la revendication 11, dans lequel la poignée amovible est accouplée aux éléments rotatifs en utilisant un mécanisme à rochet.

13. Ensemble roue jockey selon l'une quelconque des revendications précédentes, dans lequel l'ensemble roue jockey comprend de plus une poignée de commande (32) s'étendant à partir de la portion supérieure, sensiblement perpendiculairement au premier axe.

14. Ensemble roue jockey selon la revendication 13, dans lequel la poignée de commande comprend une articulation (33), de façon à pouvoir être repliée pour s'étendre sensiblement parallèlement au premier axe le long de l'élément de corps.

15. Ensemble roue jockey selon l'une quelconque des revendications précédentes, dans lequel une seconde roue (28) est accouplée de façon rotative à la portion inférieure sur un côté opposé à la première roue.

16. Remorque équipée d'un ensemble roue jockey (1) selon l'une quelconque des revendications précédentes.
